# EUROPÄISCHE PATENTSCHRIFT

(11) **EP 4 450 963 B1**
(45) Veröffentlichungstag und Bekanntmachung des Hinweises auf die Patenterteilung: **28.10.2026**
(21) Anmeldenummer: 24169591.5
(22) Anmeldetag: 11.04.2024
(51) Int. Cl.: G01N 27/30, G01N 27/49

(54) **ELEKTROCHEMISCHER GASSENSOR**
ELECTROCHEMICAL GAS SENSOR
CAPTEUR DE GAZ ÉLECTROCHIMIQUE

(30) Priorität: 19.04.2023 DE 102023109869
(43) Veröffentlichungstag der Anmeldung: 23.10.2024
(73) Patentinhaber: Dräger Safety AG & Co. KGaA, 23560 Lübeck (DE)
(72) Erfinder: Sick, Michael, 23558 Lübeck (DE); Mattern-Frühwald, Marie-Isabell, 23558 Lübeck (DE); Schenk, Susanne, 23558 Lübeck (DE)

(56) Entgegenhaltungen:
- EP-A1- 1 326 075
- DE-A1- 3 238 824
- DE-T2- 60 212 439
- DE-T2- 69 629 040
- US-A1- 2018 215 941
- US-A1- 2021 041 389
- MCMURRAY H N ET AL: "Novel thick-film pH sensors based on ruthenium dioxide-glass composites", SENSORS AND ACTUATORS B: CHEMICAL, ELSEVIER BV, NL, vol. 28, no. 1, 1 July 1995 (1995-07-01), pages 9 - 15, XP004004382, ISSN: 0925-4005, DOI: 10.1016/0925-4005(94)01536-Q

## Beschreibung

Die vorliegende Erfindung betrifft einen elektrochemischer Gassensor zur Messung von Alkohol.

Elektroden für elektrochemische Gassensoren und elektrochemische Gassensoren sind bekannt.

Elektrochemische Gassensoren weisen wenigstens eine Messelektrode auf, an welcher es im Betrieb zu einer Umsetzung - insbesondere zu einer Oxidation - eines Analyten (d.h. eines zu messenden Gases oder Dampfes) als potentieller Bestandteil eines Probegases kommt. Diese Umsetzung führt zu einer messbaren elektrischen Größe, aus welcher eine Aussage über die Konzentration des Analyten im Probegas getroffen werden kann. Auf diese Weise kann der Analyt, z.B. Alkohol, quantitativ oder qualitativ gemessen werden.

Elektrochemische Gassensoren weisen ferner wenigstens eine Gegenelektrode auf, an welcher es zu einer Gegenreaktion kommt. Beispielsweise kann die Gegenreaktion eine Reduktion von Sauerstoff sein.

Optional kann ein elektrochemischer Gassensor darüber hinaus eine Referenzelektrode aufweisen, welche ein elektrisches Bezugspotential bereitstellt. Über eine geeignete Einrichtung wie einen Potentiostaten können die jeweiligen Arbeitspotentiale von Messelektrode und Gegenelektrode relativ zu dem Bezugspotential der Referenzelektrode festgelegt werden.

Abhängig von dem umzusetzenden Analyten muss der elektrochemische Gassensor entsprechend ausgestaltet sein. Entscheidend hierfür ist die Wahl einer geeigneten Elektrode.

In US 2019 246 958 A1 wird eine Elektrode für einen elektrochemischen Gassensor zur Messung von Alkohol offenbart, welche aus Platin besteht.

In US 9 816 959 B wird eine Elektrode für einen elektrochemischen Gassensor zur Messung von Alkohol offenbart, welche ein Material ausgewählt aus Eisen, Gold, Nickel, Platin, Kohlenstoff oder eine Kombination davon umfasst.

In EP 1 326 075 A1 wird eine Elektrode für einen elektrochemischen Gassensor zur Messung von Alkohol offenbart, welche aus einer Mischung aus gesintertem Platinschwarz und PTFE besteht.

In DE 3 238 824 A1 wird ein Sauerstoffmessfühlerelement mit einem tafel- oder säulenförmigen, für Sauerstoffionen durchlässigen Festelektrolyten und auf beiden Seiten des Festelektrolyten gebildeten Elektrodenschichten offenbart, wobei mindestens eine der Elektrodenschichten aus einem gleichmäßigen, gebrannten Körper, der 100 Gew.-Teile eines Metalls und 0,1 bis 10 Gew.-Teile Glas enthält, besteht. Das Metall ist aus Platin, Rhodium, Palladium und Silber ausgewählt. Das Glas liegt in Form eines Pulvers vor.

In DE 69 629 040 T2 wird einen Halbleiter-Gassensor offenbart, der als eine auflaminierte Membran mit einer ersten Schicht, bei der eine n-Halbleiteroxidschicht Indiumoxid enthält, und mit einer zweiten Schicht, die einen Sensibilisator in Form eines Edelmetalls oder eines p-Halbleiteroxids enthält, bereitgestellt ist.

Bei der Messung von Alkohol als Analyt tritt bei elektrochemischen Gassensoren im Allgemeinen das Problem auf, dass an der Elektrode nicht nur der Analyt umgesetzt wird, sondern auch weitere, in dem Probegas enthaltene Gase oder Dämpfe umgesetzt werden können. Häufig - insbesondere bei Messungen in industrieller Umgebung - weist das Probegas CO (auch bezeichnet als Kohlenmonoxid oder Kohlenstoffmonoxid) auf. Durch die gleichzeitige Umsetzung von CO und Alkohol an der Messelektrode wird eine größere messbare elektrische Größe erzeugt, welche zu einer verfälschten Messung des Alkohols oder zu einer Fehlinterpretation des Messergebnisses führt.

Eine Aufgabe der vorliegenden Erfindung ist es daher einen elektrochemischen Gassensor zur Messung von Alkohol bereitzustellen, dessen Messverhalten in Bezug auf Alkohol, insbesondere bei Anwesenheit von CO, verbessert ist.

Diese und weitere Aufgaben werden gelöst durch den Gegenstand des unabhängigen Anspruchs.

Die abhängigen Ansprüche stellen vorteilhafte Ausgestaltungen der Erfindung bereit.

Es wird außerdem eine Zusammensetzung zur Herstellung einer Elektrode zur Verwendung in einem erfindungsgemäßen elektrochemischen Gassensor zur Messung von Alkohol offenbart. Die Zusammensetzung und die damit erhältliche Elektrode umfasst ein Metall, das eingerichtet ist, Alkohol umzusetzen, und Glas als nicht-metallisches Material. Die Zusammensetzung umfasst ferner ein Dispersionsmittel.

Erfindungsgemäß wird ein elektrochemischer Gassensor gemäß Anspruch 1 zur Messung von Alkohol bereitgestellt. Der elektrochemische Gassensor umfasst wenigstens eine der vorbeschriebenen Elektroden, wobei die Elektrode als Messelektrode ausgebildet ist, und einen Elektrolyten, welcher eingerichtet ist, die Elektrode und die poröse Trägerschicht zu benetzen.

Der elektrochemische Gassensor kann darüber hinaus weitere Bestandteile wie eine Anzahl weiterer (gleichartig oder verschiedenartig ausgebildete) Messelektroden, eine oder mehrere Gegenelektroden, eine oder mehrere Referenzelektroden, eine oder mehrere Diffusionsbarrieren, ein Gehäuse, einen oder mehrere Separatoren, ein Ausgleichsvolumen zur Aufnahme des Elektrolyten und/oder Kontaktmittel zur elektrischen Kontaktierung der Elektroden aufweisen.

Im Rahmen der Erfindung wurde überraschend gefunden, dass die im erfindungsgemäßen Gassensor verwendete Elektrode eine verbesserte Selektivität und Sensitivität für die Umsetzung von Alkohol aufweist als bekannte Elektroden, insbesondere als bekannte Elektroden auf Basis von Platin oder einem Platin/PTFE-Verbund.

Durch diese Elektrode wird eine Veränderung des elektrochemischen Verhaltens der sich im Betrieb ausbildenden Dreiphasengrenze bewirkt, so dass der Analyt, d.h. Alkohol, verbessert zur Umsetzung an der Elektrode gelangt als bei bekannten Elektroden. Insbesondere kann auf diese Weise Alkohol stärker als CO umgesetzt werden, so dass die Elektrode insgesamt vorteilhaft eine verbesserte Selektivität und Sensitivität auf Alkohol und eine vorteilhaft verringerte Querempfindlichkeit auf CO aufweist.

Unter einem Alkohol wird im Rahmen der Erfindung im allgemeinsten Fall eine organische chemische Verbindung verstanden, welche eine oder mehrere an aliphatische Kohlenstoffatome gebundene Hydroxygruppen (-O-H) aufweist. Vorzugsweise wird unter einem Alkohol spezifisch Ethanol (C2H6O) und/oder Methanol (CH3OH) verstanden.

Dabei ist die Elektrode als Verbundwerkstoff aus wenigstens zwei Grundstoffen ausgestaltet, wobei das Metall einen ersten Grundstoff bildet und das nicht-metallische Material einen zweiten Grundstoff bildet. In diesem Fall liegen das Metall und das nicht-metallische Material in (vorzugsweise ungleichmäßig) örtlich verteilter Weise in der Elektrode vor. Vorzugsweise weist die Elektrode ein Metall auf, welches eingerichtet ist, den Analyten, also Alkohol, katalytisch umzusetzen. Auf diese Weise kann eine Oxidation des Analyten an der Elektrode und somit die Umsetzung des Analyten begünstig werden. Es sind jedoch auch Bauweisen der Elektrode möglich, bei denen keine katalytische Umsetzung des Analyten erfolgt.

Unter einem Glas wird ein Werkstoff umfassend oder bestehend aus Siliziumdioxid (SiO2) verstanden, d.h. ein anorganisch-nicht-metallisches Glas.

In einer Variante der Erfindung kann das Glas aus Siliziumdioxid bestehen und wird in diesem Fall auch als Quarzglas bezeichnet.

In einer weiteren Variante der Erfindung kann das Glas neben Siliziumdioxid weitere Bestandteile umfassen, kann insbesondere Oxide wie Aluminiumoxid, Alkalioxid, Phosphorpentoxid und/oder Bortrioxid. Das Glas kann ferner ergänzend oder alternativ Halogenid-Ionen aufweisen.

Die Elektrode ist ferner eingerichtet, mit einem flüssigen sauren Elektrolyten in Kontakt zu stehen, da durch diese Kombination von Merkmalen hydrophile, protische Analyten wie Alkohol gezielt umgesetzt werden können, die Umsetzung von unerwünschten aprotischen Verbindungen wie CO jedoch weitestgehend verhindert werden kann.

Beispielsweise kann der Elektrolyt Schwefelsäure, Phosphorsäure, Perchlorsäure und/oder Trifluormethansäure umfassen, beispielsweise als Komponente oder Komponenten einer wässrigen Lösung.

Die Elektrode ist als integraler Bestandteil eines Schichtaufbaus ausgebildet, wobei die Elektrode als eine erste Schicht des Schichtaufbaus ausgebildet ist, und wobei eine inerte poröse Trägerschicht als eine zweite Schicht des Schichtaufbaus ausgebildet ist.

Auf diese Weise kann die Elektrode als Teil eines die Elektrode mechanisch versteifenden Schichtaufbaus besonders einfach gehandhabt und montiert werden. Insbesondere wird es so ermöglicht, die Elektrode als dünne Schicht auf der Trägerschicht auszubilden, so dass die Trägerschicht als Trägerstruktur für die Elektrode fungieren kann. Ferner wird auf diese Weise die Empfindlichkeit der Elektrode gegenüber Beschädigungen während einer Montage reduziert, da die Elektrode durch die Trägerschicht wenigstens einseitig geschützt ist.

Unter einer als integraler Bestandteil des Schichtaufbaus ausgebildeten Elektrode wird verstanden, dass die Elektrode und die Trägerschicht (unmittelbar oder mittelbar) unlösbar oder bedingt lösbar verbunden ausgebildet sind. Eine derartige Verbindung kann beispielswiese durch Fügen, Urformen, Umformen oder Beschichten bereitgestellt werden. Beispielsweise können Elektrode und Trägerschicht miteinander verpresst werden. Ferner beispielsweise kann die Elektrode als Fluid auf die Trägerschicht aufgetragen werden und die Elektrode so wenigstens teilweise in die Trägerschicht eindringen. Ein Auftragen mittels Fluid ist insbesondere durch ein Druckverfahren wie Siebdruck oder Inkjet-Druck möglich.

Unter einer inerten Trägerschicht wird eine Trägerschicht verstanden, welche gegenüber dem Elektrolyten, Analyten und eventuellen im bestimmungsgemäßen Betrieb entstehenden Reaktionsprodukten inert ist. In anderen Worten ist die Trägerschicht aus einem Material ausgestaltet, welches im Betriebszustand eines elektrochemischen Gassensors nicht mit den vorgenannten Substanzen reagiert.

Unter einer porösen Trägerschicht wird eine Trägerschicht verstanden, welche wenigstens teilweise miteinander verbundene Hohlräume, bezeichnet als Poren, aufweist, so dass die Trägerschicht eingerichtet ist, einen Elektrolyten in sich aufzunehmen.

Unter einer inerten porösen Trägerschicht wird folglich eine Trägerschicht verstanden, welche sowohl inert als auch porös ausgebildet ist.

Vorzugsweise umfasst die Trägerschicht Polytetrafluorethylen (PTFE), Glas, wie Borosilikatglas, oder Polypropylen (PP) als Material, wobei das Material z.B. als Textil, wie als Gewebe, Vlies oder Gewirk ausgebildet sein kann. Die Trägerschicht kann zur Verbesserung der Benetzung hydrophilisiert sein.

Ferner erfindungsgemäß ist die Elektrode porös ausgebildet.

Auf diese Weise kann die für die Umsetzung des Analyten zur Verfügung stehende wirksame Oberfläche vorteilhaft vergrößert und dessen Umsetzung an der Elektrodenoberfläche verbessert werden.

Vorzugsweise umfasst das Metall Gold, Platin, Silber, Iridium, Ruthenium und/oder Rhodium.

Im Rahmen der Erfindung wurde gefunden, dass diese Metalle oder Gemische aus diesem Metallen sich besonders zur Bereitstellung der erfindungsgemäßen Elektrode eignen.

Unter einem das Metall umfassenden Material wird dabei neben der Elementarform des Metalls auch eine chemische Verbindung verstanden, welche das Metall als Komponente aufweist, wie beispielsweise ein Metalloxid, insbesondere Platinoxid oder Rutheniumoxid.

Unter einem Partikel wird im Rahmen der Erfindung ein physisches Element mit einer Größe im Nanometerbereich und/oder Mikrometerbereich verstanden. Der Nanometerbereich beträgt erfindungsgemäß 0,1 - 999 nm, vorzugsweise 0,1 - 100 nm, ganz besonders bevorzugt 1 - 100 nm. Der Mikrometerbereich beträgt erfindungsgemäß 1 - 999 µm, vorzugsweise 1 - 300 µm.

Ein Partikel weist eine Struktur auf, beispielsweise eine Faserstruktur. Eine Faserstruktur bezeichnet einen als im Wesentlichen länglichen Körper, d.h. einen Körper, der in einer Dimension größer ist als in den beiden anderen Dimensionen. Ein länglicher Körper kann beispielsweise ein Seitenverhältnis von 1:3 bis 1:10 und vorzugsweise einen im Wesentlichen kreisförmigen Querschnitt aufweisen. Als Alternative zur Faserstruktur kann der Partikel beispielsweise als Kugelstruktur ausgestaltet sein, d.h. im Wesentlichen eine Kugelform aufweisen.

Das als Partikel bereitgestellte Metall, im Folgenden auch Metall-Partikel und das als Partikel bereitgestellte Glas, im Folgenden auch Nicht-Metall-Partikel, können dabei bezüglich der Partikelform gleichartig oder verschiedenartig ausgestaltet sein.

Die Nicht-Metall-Partikel können insbesondere als pyrogenes und/ amorphes und/oder kristallines Siliciumdioxid in Faserstruktur und/oder in Kugelstruktur ausgestaltet sein.

Durch Bereitstellung des Metalls als Partikel und des nicht-metallischen Materials als Partikel kann die Zusammensetzung vorteilhaft als Dispersion bereitgestellt werden. Somit können das Metall und das nicht-metallische Material gleichmäßig über die Elektrode verteilt werden, beispielsweise auf der Trägerschicht. Ferner wurde im Rahmen der Erfindung gefunden, dass die Selektivität und Sensitivität der Elektrode auf den Analyten durch Bereitstellung von dem Metall und dem nicht-metallischen Material als Partikel vorteilhaft verbessert werden, wodurch die Messeigenschaften der Elektrode weiter verbessert werden können.

Vorzugsweise sind die Nicht-Metall-Partikel als Glas in Faserstruktur ausgebildet, wobei die Faserstruktur ferner bevorzugt eine Länge von wenigstens 1 µm, vorzugsweise von wenigstens 5 µm aufweist, wobei die Faserstruktur ferner vorzugsweise einen Durchmesser von wenigstens 0,25 µm aufweist, wobei der Durchmesser vorzugsweise nicht mehr als 50 µm beträgt. Vorzugsweise weist die Faserstruktur einen im Wesentlichen kreisförmigen Querschnitt auf.

Ganz besonders bevorzugt weist die Faserstruktur einen Durchmesser von 0,65 µm und eine Länge von 1,95 µm auf.

Im Rahmen der Erfindung wurde gefunden, dass ein solches Material bezüglich Selektivität und Sensitivität auf Alkohol besonders gute Eigenschaften aufweist, wobei die Querempfindlichkeit auf CO deutlich reduziert ist.

Ganz besonders bevorzugt ist das Glas dabei als reines Siliciumdioxid ausgestaltet.

Vorzugsweise ist das Dispersionsmittel ein flüchtiges Dispersionsmittel, wobei das Dispersionsmittel vorzugsweise umfasst: Alkohol, insbesondere Ethanol, Methanol, n-Propanol und/oder Iso-Propanol, und/oder Wasser.

Unter einem flüchtigen Dispersionsmittel wird vorzugsweise ein Dispersionsmittel verstanden, dessen Verdunstungszahl nicht größer ist als die Verdunstungszahl von Wasser, wobei die Verdunstungszahl nach DIN 53170 bestimmt werden kann. Die nach DIN 53170 bestimmte Verdunstungszahl von Wasser beträgt beispielsweise 80.

Besonders bevorzugt ist das flüchtige Dispersionsmittel ein leichtflüchtiges Dispersionsmittel mit einer Verdunstungszahl kleiner 10.

Auf diese Weise kann das Dispersionsmittel durch Verdunstung entfernt werden.

Es wird ferner ein Verfahren zur Herstellung einer vorbeschriebenen Elektrode offenbart, welches die Schritte: Bereitstellen der vorbeschriebenen Zusammensetzung, Auftragen der Zusammensetzung auf die inerte poröse Trägerschicht, und Entfernen des Dispersionsmittels umfasst.

Das Auftragen kann auf im Wesentlichen beliebige Weise erfolgen. Geeignet ist beispielsweise ein Druckverfahren wie Siebdruck oder Inkjet-Druck oder ein Auftrag mittels Rakeln.

Das Entfernen des Dispersionsmittels erfolgt zumindest teilweise durch Verdunstung des Dispersionsmittels.

Diese und weitere Merkmale werden auch aus der nachstehenden Figurenbeschreibung ersichtlich. Dabei zeigt
- **Fig. 1**: ein Ausführungsbeispiel einer Elektrode zur Verwendung in einem erfindungsgemäßen elektrochemischen Gassensor,
- **Fig. 2**: ein Ausführungsbeispiel einer Elektrode im Schichtaufbau zur Verwendung in einem erfindungsgemäßen elektrochemischen Gassensor,
- **Fig. 3**: ein Ausführungsbeispiel eines erfindungsgemäßen elektrochemischen Gassensors,
- **Fig. 4**: ein Beispiel eines Verfahrens,
- Fig. 5: ein erstes Diagramm mit ersten Messwerten eines Versuchs mit einem erfindungsgemäßen Sensor und einem bekannten Sensor,
- Fig. 6: ein zweites Diagramm mit zweiten Messwerten eines Versuchs mit dem erfindungsgemäßen Sensor und dem bekannten Sensor.

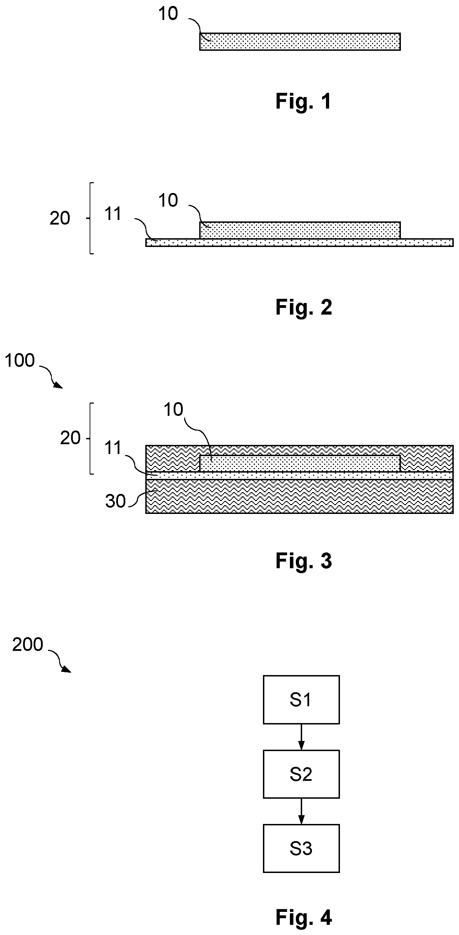

In Fig. 1 ist ein Ausführungsbeispiel einer Elektrode 10 zur Verwendung in einem erfindungsgemäßen elektrochemischen Gassensor 100 zur Messung von Alkohol dargestellt. Die Elektrode 10 umfasst ein Metall, das eingerichtet ist, Alkohol umzusetzen, und ein nicht-metallisches Material, wobei das nicht-metallische Material Glas umfasst.

In Fig. 2 ist dargestellt, dass die in Fig. 1 gezeigte Elektrode 10 als integraler Bestandteil eines Schichtaufbaus 20 ausgebildet ist, wobei die Elektrode 10 als eine erste Schicht des Schichtaufbaus 20 ausgebildet ist, und wobei eine inerte poröse Trägerschicht 11 als eine zweite Schicht des Schichtaufbaus 20 ausgebildet ist.

Die Elektrode 10 in Fig. 1 und die Elektrode 10 in Fig. 2 sind porös ausgebildet, wie dies schematisch angedeutet ist.

Bei der Elektrode 10 nach Fig. 1 und bei der Elektrode 10 nach Fig. 2 kann das Metall vorzugsweise Gold, Platin, Silber, Iridium, Ruthenium und/oder Rhodium umfassen.

Nicht dargestellt ist, dass ebenso eine Zusammensetzung zur Herstellung einer Elektrode 10 nach Fig. 1 oder Fig. 2 offenbart wird. Die Zusammensetzung umfasst das Metall als Partikel, das nicht-metallische Material als Partikel, und ein Dispersionsmittel.

Bei der Elektrode nach Fig. 1 oder Fig. 2 sowie bei der Zusammensetzung kann das nicht-metallische Material Glas in Faserstruktur umfassen.

Bei der Zusammensetzung kann das Dispersionsmittel ein flüchtiges Dispersionsmittel sein, wobei das Dispersionsmittel vorzugsweise umfasst: Alkohol, insbesondere Ethanol, Methanol, n-Propanol und/oder Iso-Propanol, und/oder Wasser.

In Fig. 4 ist ein Beispiel eines Verfahrens 200 zur Herstellung einer Elektrode 10 nach Fig. 2 dargestellt.

Das Verfahren umfasst die Schritte: S1 Bereitstellen der Zusammensetzung, S2 Auftragen der Zusammensetzung auf die inerte poröse Trägerschicht 11, und S3 Entfernen des Dispersionsmittels.

Die Elektrode 10 nach Fig. 2 kann in einem Ausführungsbeispiel durch das vorbeschriebene Verfahren 200 erhältlich sein.

In Fig. 3 ist ein erfindungsgemäßer elektrochemischer Gassensor 100 zur Messung von Alkohol dargestellt. Der elektrochemische Gassensor 100 umfasst im dargestellten Beispiel die Elektrode 10 nach Fig. 2, wobei die Elektrode 10 als Messelektrode ausgebildet ist, und einen Elektrolyten 30, welcher eingerichtet ist, die Elektrode 10 und die poröse Trägerschicht 20 zu benetzen. Der elektrochemische Gassensor 100 kann weitere nicht dargestellte Komponenten umfassen. Obwohl der Elektrolyt 30 in der schematischen Darstellung im gesamten elektrochemischen Gassensor 100 angeordnet ist, ist bekannt, dass der Elektrolyt 30 lediglich einen Teil eines Innenvolumens des elektrochemischen Gassensor 100 einnehmen kann.

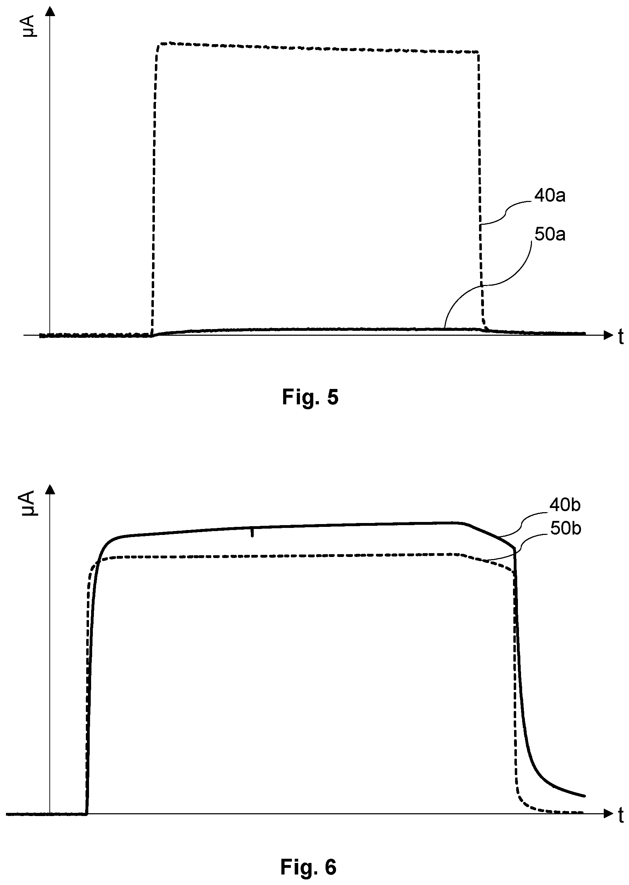

Die vorteilhafte erfindungsgemäße Wirkung des erfindungsgemäßen elektrochemischen Gassensors 100 wird außerdem durch zwei in Figuren 5 und 6 dargestellten Diagramme deutlich.

In Fig. 5 in ein erstes Diagramm mit ersten Messwerten eines Versuchs mit einem erfindungsgemäßen elektrochemischen Gassensor 100, dargestellt als durchgängige Linie 50a und mit einem bekannten Sensor, dargestellt als gestrichelte Linie 40a abgebildet. In diesem Versuch wurden ein erfindungsgemäßer elektrochemischer Gassensor 100 und ein bekannter Sensor auf Basis von Platin mit 100 ppm CO begast und das aus der Begasung resultierende Messsignal in µA über die Zeit t aufgetragen. Der bekannte Sensor ist dabei zur Messung von organischen Dämpfen (organic vapors) ausgelegt. Deutlich zu erkennen ist, dass der bekannte Sensor bei Begasung mit CO ein hohes Messsignal liefert, wohingegen der erfindungsgemäße elektrochemische Gassensor 100 nur ein geringes Messsignal liefert. Der erfindungsgemäße Gassensor 100 bietet folglich vorteilhaft eine deutlich geringere Querempfindlichkeit auf CO.

In Fig. 6 ist ein zweites Diagramm mit zweiten Messwerten eines Versuchs mit demselben erfindungsgemäßen elektrochemischen Gassensor 100 wie aus Fig. 5, dargestellt als durchgängige Linie 40b und mit demselben bekannten Sensor wie Fig. 5, dargestellt als gestrichelte Linie 50b abgebildet. In diesem Versuch wurden der erfindungsgemäße elektrochemische Gassensor 100 und der bekannte Sensor mit 250 ppm Ethanol-Trockengas begast und das aus der Begasung resultierende Messsignal in µA über die Zeit t aufgetragen. Gut zu erkennen ist, dass der erfindungsgemäße elektrochemische Gassensor 100 und der bekannte Sensor eine etwa vergleichbare Empfindlichkeit auf Ethanol aufweisen.

Aus der Zusammenschau der beispielhaften Versuche nach Fig. 5 und 6 wird deutlich, dass der erfindungsgemäße elektrochemische Gassensor 100 verglichen mit einem bekannten Sensor eine reduzierte Querempfindlichkeit auf CO bei gleichzeitig guter Empfindlichkeit auf Alkohol aufweist.

### Bezugszeichenliste

- 10: Elektrode
- 11: Trägerschicht
- 20: Schichtaufbau
- 30: Elektrolyt
- 50a, 40b: Messkurven eines erfindungsgemäßen elektrochemischen Gassensors
- 40a, 50b: Messkurven eines bekannten Sensors
- 100: Elektrochemischer Gassensor
- 200: Verfahren

- S: Schritte des Verfahrens

## Patentansprüche

1. Elektrochemischer Gassensor (100) zur Messung von Alkohol, umfassend:
- eine Elektrode (10), welche als integraler Bestandteil eines Schichtaufbaus (20) ausgebildet ist,
wobei die Elektrode (10) als eine erste Schicht des Schichtaufbaus (20) ausgebildet ist, und wobei eine inerte poröse Trägerschicht (11) als eine zweite Schicht des Schichtaufbaus (20) ausgebildet ist,
wobei die Elektrode (10) porös ausgebildet ist,
wobei die Elektrode (10) als Messelektrode ausgebildet ist, und wobei der Gassensor (100) ferner umfasst:
- einen flüssigen sauren Elektrolyten (30), welcher eingerichtet ist, die Elektrode (10) und die inerte poröse Trägerschicht (11) zu benetzen,
**dadurch gekennzeichnet, dass**
die Elektrode (10), als Partikel, ein Metall und/oder eine Metallverbindung umfasst, das oder die eingerichtet ist, Alkohol umzusetzen, und
die Elektrode (10), als Partikel, Glas umfasst.

2. Elektrochemischer Gassensor (100) nach Anspruch 1,
wobei das Metall umfasst: Gold, Platin, Silber, Iridium, Ruthenium und/oder Rhodium.

3. Elektrochemischer Gassensor (100) nach Anspruch 1 oder 2,
wobei das Glas, als Partikel, eine Faserstruktur aufweist,
wobei die Faserstruktur vorzugsweise eine Länge von wenigstens 1 µm, vorzugsweise von wenigstens 5 µm aufweist,
wobei die Faserstruktur vorzugsweise einen Durchmesser von wenigstens 0,25 µm aufweist, wobei der Durchmesser vorzugsweise nicht mehr als 50 µm beträgt.

## Claims

1. Electrochemical gas sensor (100) for measuring alcohol, comprising:
- an electrode (10) which is designed as an integral part of a layer structure (20),
the electrode (10) being designed as a first layer of the layer structure (20), and with an inert porous support layer (11) being designed as a second layer of the layer structure (20),
the electrode (10) being porous,
the electrode (10) being designed as a measuring electrode, and the gas sensor (100) further comprising:
- a liquid acidic electrolyte (30) which is designed to wet the electrode (10) and the inert porous support layer (11),
**characterized in that**
the electrode (10), as a particle, comprises a metal and/or a metal compound that is designed to convert alcohol, and
the electrode (10), as a particle, comprises glass.

2. Electrochemical gas sensor (100) according to claim 1,
wherein the metal comprises: gold, platinum, silver, iridium, ruthenium and/or rhodium.

3. Electrochemical gas sensor (100) according to claim 1 or 2,
wherein the glass, as a particle, has a fibrous structure,
wherein the fibrous structure preferably has a length of at least 1 µm, preferably of at least 5 µm,
wherein the fibrous structure preferably has a diameter of at least 0.25 µm, wherein the diameter preferably is not more than 50 µm.

## Revendications

1. Capteur de gaz électrochimique (100) permettant de mesurer un alcool, comprenant :
- une électrode (10) qui est réalisée comme une partie intégrante d'une structure de couches (20),
dans lequel l'électrode (10) est réalisée comme une première couche de la structure de couches (20), et dans lequel une couche de support (11) poreuse inerte est réalisée comme une seconde couche de la structure de couches (20),
dans lequel l'électrode (10) est réalisée de manière à être poreuse,
dans lequel l'électrode (10) est réalisée comme une électrode de mesure, et dans lequel le capteur de gaz (100) comprend en outre :
- un électrolyte (30) acide liquide conçu pour mouiller l'électrode (10) et la couche de support (11) poreuse inerte,
**caractérisé en ce que**
l'électrode (10) comprend, sous forme de particules, un métal et/ou un composé métallique conçus pour faire réagir l'alcool, et
l'électrode (10) comprend, sous forme de particules, du verre.

2. Capteur de gaz électrochimique (100) selon la revendication 1,
dans lequel le métal comprend : or, platine, argent, iridium, ruthénium et/ou rhodium.

3. Capteur de gaz électrochimique (100) selon la revendication 1 ou 2,
dans lequel le verre présente, sous forme de particules, une structure fibreuse,
dans lequel la structure fibreuse présente de préférence une longueur d'au moins 1 µm, de préférence d'au moins 5 µm,
dans lequel la structure fibreuse présente de préférence un diamètre d'au moins 0,25 µm, dans lequel le diamètre n'est de préférence pas supérieur à 50 µm.
